# EUROPEAN PATENT APPLICATION

(11) **EP 1 566 599 A2**
(43) Date of publication of application: **24.08.2005**
(21) Application number: 05075401.9
(22) Date of filing: 18.02.2005
(51) Int. Cl.: F25B 1/08, F25B 29/00

(54) **System and method for operating a vapor-ejector heat pump**

(30) Priority: 20.02.2004 NL 1025537
(71) Applicant: GASTEC Technology B.V., 7327 AC Apeldoorn (NL)
(72) Inventor: Jansen, Cornelis, 7315 DP Apeldoorn (NL)
(74) Representative: Winckels, Johannes Hubertus F.

(57) **Abstract**

A heat pump provided with at least one evaporator (3,4) and at least one condenser (5,6), wherein at least one vapor boiler (12) is provided and at least two ejectors (1,2) are provided which are connected to the at least one vapor boiler, wherein either for each of two ejectors a separate evaporator is provided or for each of two ejectors a separate condenser is provided or for each of two ejectors both a separate evaporator and a separate condenser are provided. The invention further relates to a heat pump provided with at least one evaporator and at least one condenser, wherein at least one vapor boiler is provided, of which a vapor outlet is connected to at least one ejector, wherein a working fluid pump (11) is provided for pumping working fluid from the condenser to the vapor boiler, wherein the working fluid pump is driven using high pressure gas. Further, the invention relates to a method for pumping heat in a heat pump, wherein use is made of an apparatus according to the invention.

## Description

This invention relates to a system and method for operating a vapor-ejector heat pump to improve the temperature lift and the efficiency of the heat pump. By the use of this invention, this type of heat pump can be deployed better for cooling and heating in air conditioner installations.

The ejector heat pump has a number of important advantages over the electrically-driven heat pumps with mechanical compressor.

The ejector heat pump is driven with thermal energy (heat). Accordingly, the driving energy can also consist of residual heat and waste heat, such as hot exhaust gases or cooling water heat from combustion engines of cars, boats and total energy systems.

### Statement of the problem:

- A disadvantage of the ejector heat pump is the small temperature lift that can be achieved with it.

The COP (the efficiency of the heat pump action) of the system moreover decreases very strongly with an increasing temperature difference between hot and cold side.

This has heretofore limited the application possibilities for this simple and inexpensive heat pump.

### Known solutions:

- The temperature lift can be raised by having a number of ejectors work in cascade (in series), so that the total temperature lift is the sum of the temperature increases that are produced by the different ejectors. However, the COP of such cascade systems is considerably lower than that of systems with a single ejector.
- The temperature lift can also be raised by raising the vapor pressure of the ejector, but that effect is limited. Moreover, the efficiency of the vapor generation decreases because the higher vapor pressure requires a higher vapor temperature. The overall efficiency (COP) of the heat or cold generation then decreases because more primary energy is needed to generate the high pressure vapor.

### Solution according to the invention:

The invention provides a heat pump provided with at least one evaporator and at least one condenser, wherein at least one vapor boiler is provided and at least two ejectors are provided which are connected to the at least one vapor boiler, wherein either for each of two ejectors a separate evaporator is provided or for each of two ejectors a separate condenser is provided or for each of two ejectors both a separate evaporator and a separate condenser are provided. In effect, therefore, the heat pump is provided with two or more ejectors connected in parallel.

The foregoing wording is understood to mean that also more than two parallel ejectors may be provided, for instance three ejectors which are each connected to a separate evaporator and of which, for instance, the first two ejectors are connected to a common condenser and the third ejector to a separate condenser (hence, three evaporators, three ejectors and two condensers), or, for instance, four ejectors which are connected to a common evaporator and which are each connected to a separate condenser (hence, one evaporator, four ejectors and four condensers). It will be clear that an infinite number of variations are possible.

The ejectors are then preferably especially designed to work optimally at a particular temperature lift. Depending on the use, according to a further elaboration of the invention, the ejectors may each be provided with a separate evaporator and separate condenser. According to an alternative elaboration, it is possible to provide a separate evaporator at each ejector and further to work with a common condenser. According to another alternative elaboration, it is possible to work with a common evaporator and separate condensers. As already indicated above, other combinations of numbers of ejectors, evaporators and condensers are also possible, as long as what is accomplished is that the temperature jump that is to be bridged per ejector is less than in the case of a single ejector with a single evaporator and a single condenser.

As will be clarified on the basis of the exemplary embodiments described hereinafter, by virtue of the small temperature lift per ejector, a better COP or efficiency is obtained for the system as a whole.

The invention further relates to a heat pump provided with at least one evaporator and at least one condenser, wherein at least one vapor boiler is provided, of which a vapor outlet is connected to at least one ejector, wherein a working fluid pump is provided for pumping working fluid from the condenser to the vapor boiler, wherein the working fluid pump is driven using high pressure gas. By making use of a pump drive based on high pressure gas, which may originate, for instance, from the vapor boiler, the heat pump can also work in an environment where no electrical energy is available. Moreover, in the apparatus according to the state of the art, a rather powerful electric motor is needed to produce the necessary power for producing the required pressure to enable working fluid to be pumped into the vapor boiler/ pressure vessel. When, in accordance with the invention, presently the high pressure gas is utilized, this powerful electric motor can be omitted, which is particularly favorable for some applications, for instance in a boat, caravan or car. It will be clear that instead of high pressure gas from the pressure tank itself, also high pressure gas from a different source, if available, can be used for this purpose. Thus, for instance, heat from the exhaust gases or cooling water of a combustion engine or the compressed air coming from a compressed air source could be used for this purpose.

According to a further elaboration of the invention, the working fluid pump may be provided with a turbine through which the high pressure gas is guided, with the turbine forming the drive of the pump.

According to an alternative further elaboration, the working fluid pump can be constructed as a double plunger pump of which the at least one plunger has a first end received in a drive cylinder chamber, which drive cylinder chamber is connected via control valves to the high pressure gas source, while a second end of the at least one plunger is received in a pressure cylinder chamber, which pressure cylinder chamber is provided with an inlet which is connected via a non-return valve to a return line coming from the at least one condenser, the pressure cylinder chamber being provided with an outlet which is connected via a non-return valve to a supply line which is connected to the vapor boiler. When the high pressure gas source is formed by the vapor boiler, the diameter of the drive cylinder chamber should be greater than that of the pressure cylinder chamber.
Fig. 1 shows a first exemplary embodiment, in which each ejector is provided with a separate evaporator and a separate condenser;
Fig. 2 shows a second exemplary embodiment, in which at each ejector a separate evaporator is provided and in which the ejectors are connected to a common condenser;
Fig. 3 shows a third exemplary embodiment, in which the ejectors are connected to a common evaporator and in which each ejector is connected to a separate condenser;

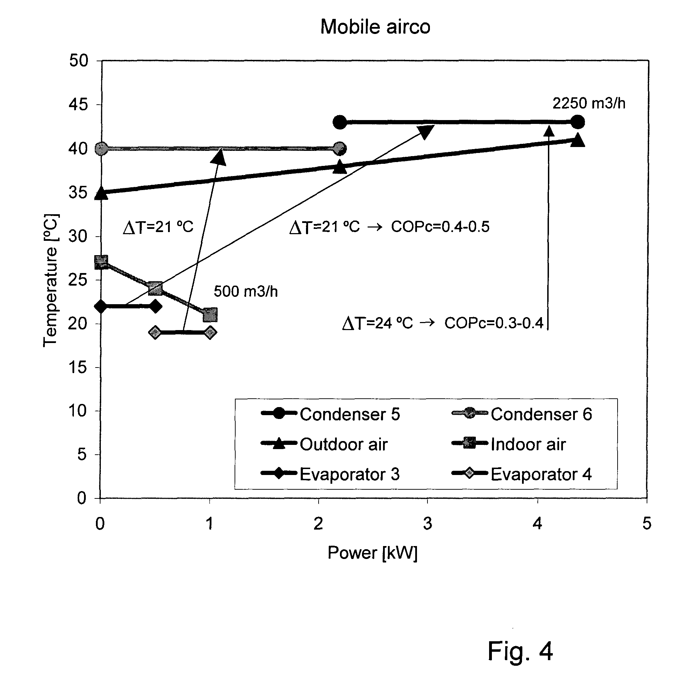

Fig. 4 shows a diagram in which the improvement of COP (cooling) by the use of two ejectors according to the invention is shown; and
Fig. 5 schematically shows the operation of a plunger pump.

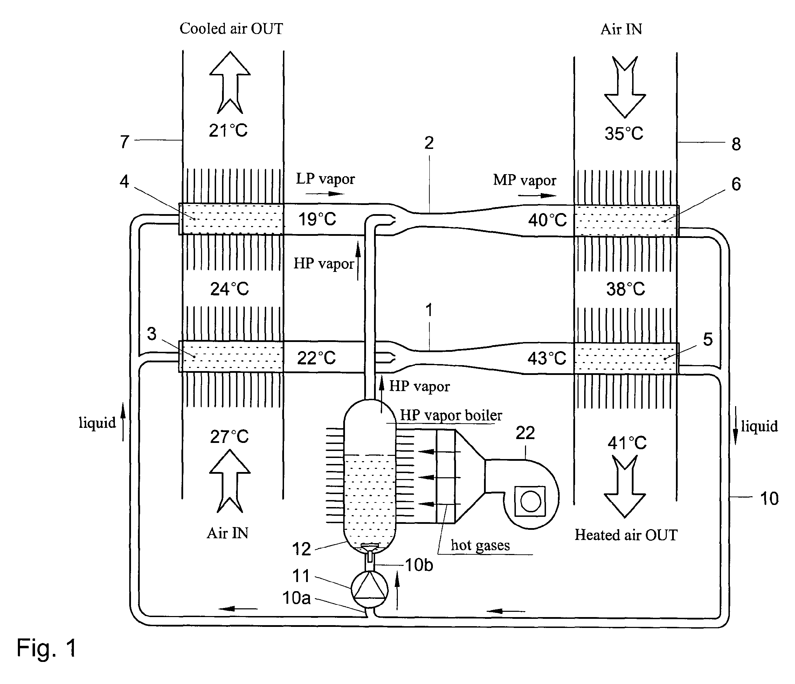

The operation will be explained with reference to an air conditioner system, as outlined in Fig. 1 and constructed with two ejectors 1 and 2, respectively, each with a separate evaporator 3 and 4, respectively, and a separate condenser 5 and 6, respectively. The evaporators 3, 4 are arranged in series in a first air channel 7. The condensers 5, 6 are arranged in series in a second air channel 8. The working fluid which is sometimes in the liquid phase and sometimes in the gaseous phase circulates through the evaporators 3, 4, the ejectors 1, 2 and the condensers 5, 6 via a system of lines 10. Via a working fluid pump 11, the working fluid is pumped into a vapor boiler 12, where the working fluid is heated in order to bring it into the gaseous phase. Heating in the vapor boiler can for instance be done using a gas-fired burner 22, whose flue gases heat the vapor boiler.

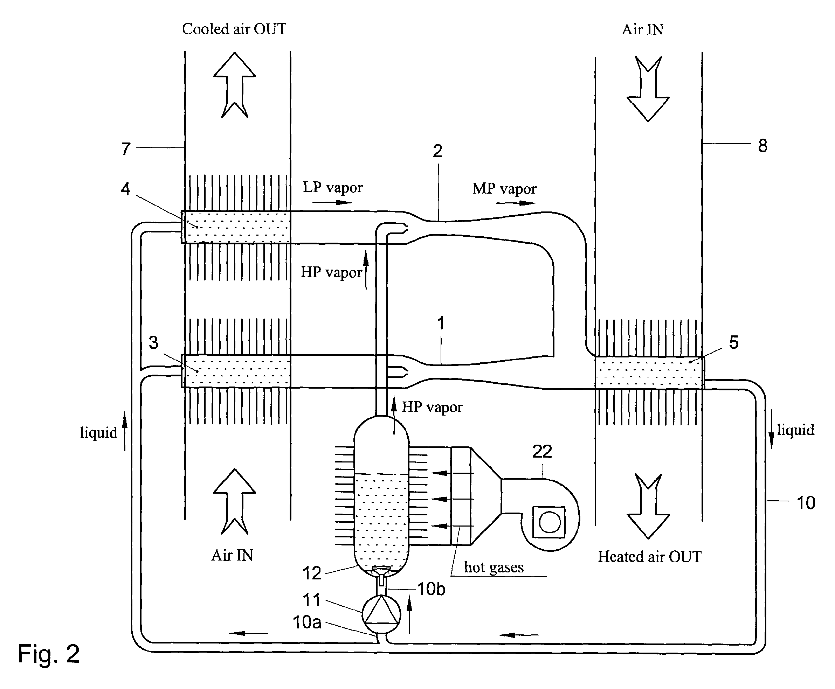

The construction of Fig. 2 is distinguished from that of Fig. 1 in that it includes only one condenser 5.

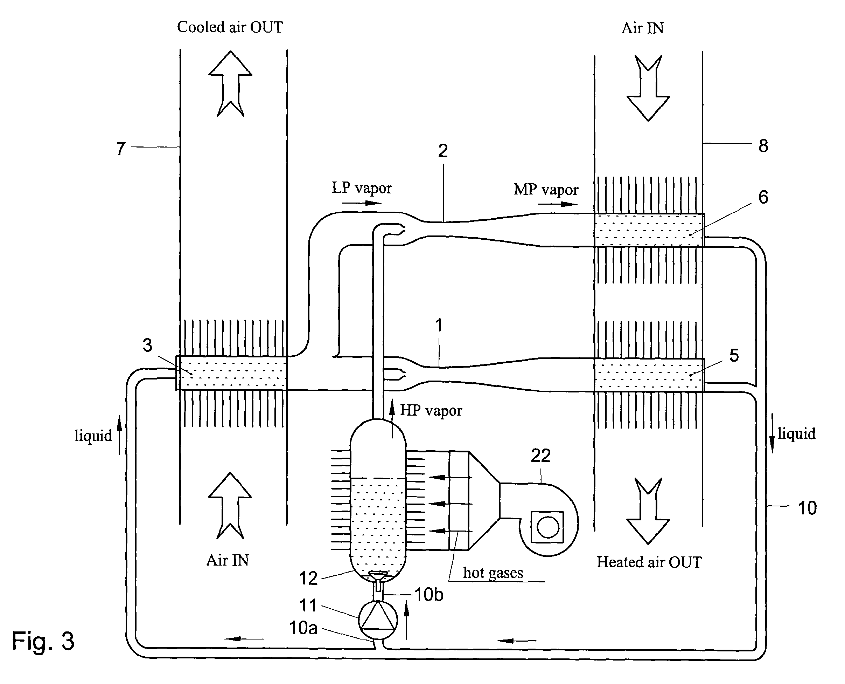

The construction of Fig. 3 is distinguished from that of Fig. 1 in that it includes only one evaporator 3.

In the exemplary embodiment of Fig. 1, the ventilating air is cooled in two stages. With evaporator 3, which has a temperature of 22 °C, the temperature of the passing air is lowered from 27 to 24 °C. The extracted heat is delivered, together with the heat supplied by the ejector 1, via condenser 5 to an air stream, which thereby heats up from 38 to 41 °C. Ejector 1 has preferably been optimized to effect the temperature lift occurring therein - in this case a temperature lift from 22 °C to 43 °C, i.e. 21 °C - at these temperatures with a highest possible COP.

With evaporator 4, which has a temperature of 19 °C, the temperature of the cooled air is subsequently lowered further to a blow-out temperature of 21 °C.

The extracted heat is now delivered via condenser 6 to the outdoor air, which thereby heats up from 35 to 38 °C. Ejector 2 has preferably been optimized to effect the temperature lift occurring therein - in this case a temperature lift from 19 °C to 40 °C, i.e. 21°C - at these temperatures with a highest possible COP.

Both steps can take place with a COP of 0.4 to 0.5 in the case of cooling and a COP of 1.4 to 1.5 in the case of heating.

If the total required temperature lift of 24 °C, which is now effected by evaporator 4 (19 °C) and condenser 5 (43 °C), had to be realized with a single ejector, the COP would be only 0.3 to 0.4 in the case of cooling and 1.3 to 1.4 in the case of heating. The potential energy saving by the use of the invention is therefore 20 to 25% in the case of cooling and ca. 7% in the case of heating.

The calculations are based on the use of water as coolant (working medium) and air as heat transport medium.

However, the invention can also be practiced using other working media, such as, for instance, various hydrocarbons, and using other heat transport media than air, such as water or thermal oil.

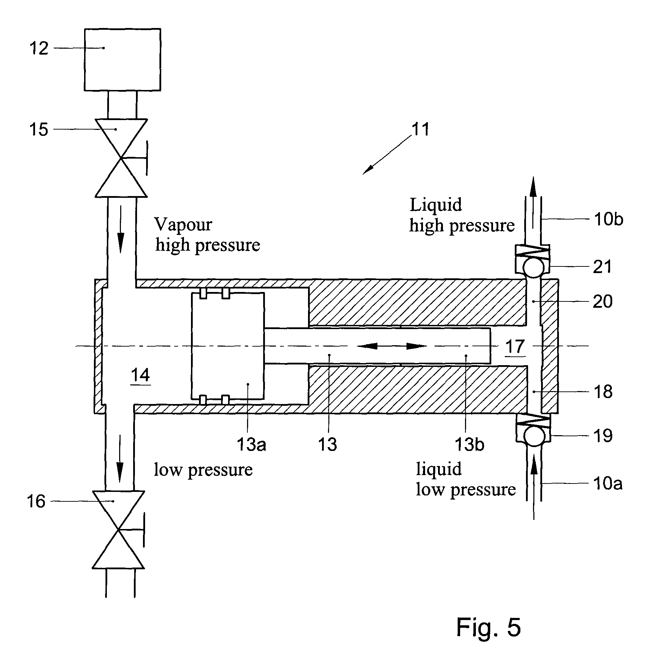

As already indicated hereinabove, the working fluid pump 11 can be driven by high pressure gas. To that end, the working fluid pump 11 can for instance be constructed as represented in Fig. 5. Fig. 5 shows a double plunger pump 11 of which the at least one plunger 13 has a first end 13a received in a drive cylinder chamber 14, which drive cylinder chamber is connected via control valves 15, 16 to a high pressure gas source, such as for instance the vapor boiler 12, but other high pressure gas sources are also possible options. A second end 13b of the at least one plunger 13 is received in a pressure cylinder chamber 17, which pressure cylinder chamber 17 is provided with an inlet 18 which is connected via a non-return valve 19 to a return line 10a coming from the at least one condenser 5, 6. The pressure cylinder chamber 17 is further provided with an outlet 20 which is connected via a non-return valve 21 to a supply line 10b which is connected to the vapor boiler 12. By appropriately driving the control valves 15, 16, working fluid coming from line 10a can be pumped to line 10b to fill the vapor boiler 12. As driving medium of the pump 11, the vapor that is generated in the vapor boiler 12 can be used. As already observed hereinabove, when the high pressure gas source is formed by the vapor boiler 12, the diameter of the drive cylinder chamber 14 should be greater than that of the pressure cylinder chamber 17.

### Application possibilities:

Heat pump systems according to the invention can be used *inter alia* for:
Cooling and heating of cars and camper vans,
Cooling and heating of trailer homes and boats,
Cooling and heating of dwellings and offices.

Explanation regarding cooling and heating of cars and camper vans.

In the cooling of cars and camper vans, use is made of mechanically or electrically driven compressor cooling systems which are driven directly or indirectly by the engine.

The cooling system according to the invention makes it possible to utilize the heat of the exhaust gases and/or heat from the engine cooling system for cooling. This enables an energy saving and emission reduction for road traffic of 5 to 10%, that is the extra fuel consumption of the engine with the air conditioner switched on.

Explanation regarding cooling and heating of trailer homes and boats.

In the cooling of trailer homes and (moored) boats, in most cases no use can be made of electrically driven cooling machines, because there is no electric current present or because the power that is available is too low. In these cases, the ejector cooling system according to the invention is an attractive solution. The heat that is needed can be supplied by a burner fed with diesel or with gas from a gas tank (LPG, propane, hydrogen), so that the equipment can be used anytime and anywhere.

Explanation regarding heating and cooling of dwellings and offices.

At the Kyoto climate conference, the Netherlands has committed itself to reduce CO₂ emission by 6%.

The government stimulates large-scale deployment of heat pumps for the purpose of energy saving in the built-up environment. Keywords in this regard are: efficiency improvement, economic deployability, innovative application and, mentioned especially for the built-up environment, the development of small, cost-effective heat pump systems. Accordingly, boiler manufacturers are looking for heat pump technologies that can be integrated into their CH boiler systems.

Although by now well-proven heat pump systems are available, they are not applied on a large scale. The high investment costs, especially in the case of existing buildings, are the most important impediment.

With the thermo compressor (vapor ejector), vapor can be sucked in from different sources, so that, for instance, residual heat from flue gases, residual heat from the exhaust air and/or waste water from the building, and also heat from a solar collector, can be utilized.

Through large-scale deployment of CH-boilers having this heat pump function, a sizeable potential of energy saving and CO₂ emission reduction in the built-up environment can be utilized.

For cooling dwellings and offices, to date mainly electrically driven compressor cooling systems have been used. The costs of cooling are consequently considerable.

On hot days, the massive employment of electrical cooling devices sometimes leads to overloading of the electricity grid.

Ejector cooling systems driven by district heating according to the invention can contribute to the solution of this problem.

The dwelling can be cooled by extracting heat from the circulating ventilating air or from the supply air. The extracted heat can be utilized for heating tap water, or be stored in underground heat buffers to be used for heating during the heating season.

It will be clear that the invention is not limited to the exemplary embodiment described but that various modifications within the framework of the invention, as defined by the claims, are possible.

## Claims

1. A heat pump provided with at least one evaporator and at least one condenser, wherein at least one vapor boiler is provided and at least two ejectors are provided which are connected to the at least one vapor boiler, wherein either for each of two ejectors a separate evaporator is provided or for each of two ejectors a separate condenser is provided or for each of two ejectors both a separate evaporator and a separate condenser are provided.

2. A heat pump according to claim 1, provided with at least two evaporators, wherein the evaporators are arranged in series in a current of fluid from which heat is extracted.

3. A heat pump according to claim 1 or 2, provided with at least two condensers, wherein the condensers are arranged in series in a current of fluid to which heat is supplied.

4. A heat pump, optionally according to any one of the preceding claims, provided with at least one evaporator and at least one condenser, wherein at least one vapor boiler is provided, of which a vapor outlet is connected to at least one ejector, wherein a working fluid pump is provided for pumping working fluid from the condenser to the vapor boiler, wherein the working fluid pump is driven using high pressure gas.

5. A heat pump according to claim 4, wherein the pump is provided with a turbine through which the high pressure gas is guided, wherein the turbine forms the drive of the working fluid pump.

6. A heat pump according to claim 4 or 5, wherein the high pressure gas is high pressure vapor coming from the vapor boiler.

7. A heat pump according to claim 4 or 6, wherein the working fluid pump is constructed as a double plunger pump of which the at least one plunger has a first end received in a drive cylinder chamber, which drive cylinder chamber is connected via control valves to the high pressure gas source, while a second end of the at least one plunger is received in a pressure cylinder chamber, which pressure cylinder chamber is provided with an inlet which is connected via a non-return valve to a return line coming from the at least one condenser, the pressure cylinder chamber being provided with an outlet which is connected via a non-return valve to a supply line which is connected to the vapor boiler.

8. A method for pumping heat in a heat pump, wherein use is made of an apparatus according to any one of the preceding claims.

9. A method according to claim 8, wherein the temperature difference which is to be bridged per ejector is kept low by connecting several ejectors in parallel and by at least either providing a separate evaporator for each of the two parallel ejectors or providing a separate condenser for each of the two parallel ejectors or providing both a separate evaporator and a separate condenser for each of the two parallel ejectors.

10. A method according to claim 8, wherein the heat pump is provided with a working fluid pump for filling the vapor boiler with working fluid which originates from a said condenser, wherein the working fluid pump is driven with high pressure gas.

11. A method according to claim 10, wherein the high pressure gas is formed by vapor originating from the vapor boiler.
